(19) Europäisches Patentamt
European Patent Office
Office européen des brevets

(11) Veröffentlichungsnummer: **0 432 620 A1**

(12) **EUROPÄISCHE PATENTANMELDUNG**

(21) Anmeldenummer: **90123282.7**

(51) Int. Cl.5 **D04H 3/16**, C08G 63/68

(22) Anmeldetag: **05.12.90**

(30) Priorität: **09.12.89 DE 3940713**

(43) Veröffentlichungstag der Anmeldung:
**19.06.91 Patentblatt 91/25**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Schöps, Michael**
**Auenweg 11**
**W-8934 Grossaitingen(DE)**

# (54) Flammhemmendes Vlies mit Bindefilamenten.

(57) Beschrieben wird ein flammhemmendes, schmelzbinderverfestigtes Spinnvlis aus tragenden Filamenten und als Schmelzbinder dienenden Binderfilamenten, wobei die Binderfilamente aus einem modifizierten Polyethylenterephthalat bestehen, in dessen Polymerkette phosphorhaltige Kettenglieder einkondensiert sind und das dadurch permanent flammhemmende Eigenschaften aufweist.

EP 0 432 620 A1

# FLAMMHEMMENDES VLIES MIT BINDEFILAMENTEN

Die vorliegende Erfindung betrifft ein flammhemmendes schmelzbinderverfestigtes Spinnvlies aus tragenden Filamenten und als Schmelzbinder dienenden flammfesten Binderfilamenten, die aus einem modifizierten Polyester bestehen.

Schmelzbinderverfestigte Spinnvliese, sowie flammhemmende Spinnvliese sind bereits bekannt. So beschreiben die DE-PS 22 40 437 und die DE-OS 36 42 089 schmelzbinderverfestigte Spinnvliese, bei denen sowohl die tragenden Filamente, wie auch die Binderfilamente aus Polyestern bestehen können. Bei dem Spinnvlies nach der DE-PS 22 40 437 werden Filamente eines relativ groben Einzeltiters von mehr als 8 dtex verwendet. Der Anteil der Binderfilamente liegt bei 10-30 %, vorzugsweise zwischen 15-25 %. Bei dem Spinnvlies nach der DE-OS 36 42 089 sind in den Beispielen Einzeltiter von 5 bzw. 12 dtex angegeben; der Anteil der Binderfilamente liegt zwischen 10 und 50 %, vorzugsweise zwischen 15 und 30 %. Das Flächengewicht ist mit größer als 120 g/m$^2$ angegeben.

Ein ähnliches Spinnvlies ist in der DE-OS 34 19 675 beschrieben. Dieses Spinnvlies, das als Verstärkungseinlage in Dach- und Dichtungsbahnen verwendet werden soll, besitzt tragende Filamente aus Polyethylenglykolterephthalat und Binderfilamente aus Polybutylenglykolterephthalat. Der Anteil der Binderfilamente soll 10 bis 30 % betragen. In den Beispielen sind als Werte für das Flächengewicht 100, 140 und 180 g/m$^2$, für den Einzeltiter 4,5 und 5,6 dtex sowie für den Anteil der Binderfilamente 10 bis 30 % angegeben.

Polyester mit flammwidrigen Eigenschaften, die phosphorhaltige Verbindungen enthalten, sind z.B. aus der FR-PS 11 96 971 bekannt. Darin sind Copolyester mit Phosphorsäureanteilen beschrieben, welche flammfest und hitzebeständig sind. Diese Copolyesterprodukte können als Flammschutz- und Imprägnierungsmittel und als Klebstoffe oder Lacke, sowie als Zwischenprodukte verwendet werden. Ein Verspinnen zu Fäden und Fasern ist allerdings nicht möglich, da ein hoher Phosphorgehalt eine Versprödung der Produkte bewirkt.

Es ist auch bekannt,Spinnvliese aus flammwidrigen Polyestern dadurch herzustellen, indem man in die Polyester Phosphorverbindungen (z.B. Polyphosphonate oder bestimmte Phosphorsäureester mit halogenhaltigen aromatischen Dihydroxyverbindungen), welche nicht in die Polymerketten eingebaut werden, inkorporierte. Obgleich der Einsatz diesbezüglicher Additive zu guten, allerdings nicht permanenten Flammschutzeigenschaften führte, sind einige Nachteile doch nicht zu übersehen, welche vor allem auf die erhebliche Migrationsfähigkeit der Additive in den Polymeren zurückzuführen ist.

Einerseits kommt es dadurch zu einer gewissen Toxizität der Polymerenprodukte, andererseits aber auch zu einer leichten Auswaschbarkeit der Additive etwa bei der Chemischreinigung entsprechender Faserartikel. Durch das Auswaschen verlieren die Polymeren-Produkte dann natürlich ihre flammwidrigen Eigenschaften.

Teilweise sind die ziemlich hochviskosen polymeren Additive auch noch schwierig völlig homogen mit den Polyestern zu vermischen und führen außerdem zu unerwünscht hohen Diglykolgehalten, sofern sie noch während der Polyesterbildungsreaktion zugesetzt werden. Gegenüber den Polymeren, welche P-Verbindungen in die Kettenmoleküle eingebaut enthalten, sind die Polymeren mit den entsprechenden Additiven auch schlechter färbbar.

Bei allen vorbekannten Spinnvliesen handelt es sich entweder um relativ schwere, grobtitrige Spinvliese mit einem vergleichsweise hohen Schmelzbinderanteil, die ungenügende flammhemmende Eigenschaften besitzen, oder aber um flammfeste Spinnvliese aus Polyestern, die zwar flammwidrig sind, sich aber schlecht verarbeiten lassen und nicht befriedigende textile Eigenschaften besitzen. Polyester mit guten flammhemmenden Eigenschaften, die ferner gut verspinnbar sind und gute textile Eigenschaften besitzen, werden in der DE-PS 23 46 787 beschrieben. Spinnvliese aus derartigen modifizierten Polyestern lassen sich jedoch wie alle rein thermisch verfestigten Spinnvliese, nur bis zu einem Flächengewicht von ca. 50 g/m$^2$ herstellen, da oberhalb dieser Grenze eine zunehmende Tendenz zur Delaminierung beobachtet wird.

Die thermoplastischen Polyester (speziell Polyethylenterephthalat und Polybutylenterephthalat) weisen eine relativ geringe Brennbarkeit auf, da sie sich der Flamme durch Abschmelzen entziehen. Zur Herstellung von Spinnvliesen mit höheren Flächengewichten werden daher oft Mischungen der beiden Polyestertypen verwendet, wobei die Polybutylenfilamente aufgrund ihres niedrigeren Schmelzpunktes als Binderfilamente dienen. Dies führt jedoch erstaunlicherweise zu einer Verschlechterung der flammhemmenden Eigenschaften gegenüber denen der reinen Polyethylenterephthalat-Spinnvliese.

Es bestand daher immer noch die Aufgabe,ein flammhemmendes, schmelzbinderverfestigtes, feintitriges Leichtspinnvlies mit einem Flächengewicht von über 50 g/m$^2$, das sich durch eine hohe dynamische Tüchtigkeit, d.h. einen hohen Widerstand gegen Wechselbelastung auszeichnet, herzustellen.

Die Lösung dieser Aufgabe ist ein flammfestes schmelzbinderverfestigtes Spinnvlies aus unmodifizierten Polyestern, vorzugsweise Polyethylenterephthalat, der eingangs angegebenen Gattung dadurch gekennzeichnet, daß als Binderfilamente schwer entflammbare Polyester aus Dicarbonsäure- und Diolkomponenten mit einkondensierten P-haltigen Kettengliedern eingesetzt werden. Bevorzugt liegt das Flächengewicht des Spinnvlieses über 50 g/m$^2$, besonders bevorzugt ist der Einzeltiter der tragenden Filamente und Binderfilamente im Bereich zwischen 1 und 7 dtex. Der Anteil der Binderfilamente kann je nach Einsatzgebiet auch unter 10 Gew.-% liegen.

Überraschenderweise hat sich gezeigt, daß die erfindungsgemäßen Polyester-Vliese mit Zusatz speziell modifizierter Polyester als Binderfilamente sehr gute flammhemmende Eigenschaften besitzen, sich darüber hinaus als feintitrige Leichtspinnvliese herstellen lassen, und auch noch gute Festigkeitseigenschaften besitzen.

In Mischfasertextilien, also auch in solchen mit Polyesterfasern, kann aus dem Brennverhalten der Einzelkomponente bekanntermaßen niemals auf das Brennverhalten des Mischgewebes geschlossen werden, so daß die Eigenschaften des erfindungsgemäßen Spinnvlieses nicht vorhersehbar waren. Diese Einschränkung ist für Mischgewebe auch dann gültig, wenn sie auf irgendeine Weise schwer entflammbar gemacht werden, so ist z.B. Polyethylenterephthalat relativ schwer brennbar, dagegen sind Mischgewebe aus Polyethylenterephthalat mit Polybutylenterephthalat-Bindefasern erstaunlicherweise wesentlich leichter brennbar.

Die Tatsache, daß Polyester, aber auch Cellulose, allein wesentlich weniger brennbar sind als ihre Mischungen wird auch in der Literatur vielfach bestätigt (Textilveredelung 8, 1973, Seite 310/311).

Vorzugsweise liegt das Flächengewicht des Spinnvlieses zwischen 50 und 200 g/m$^2$, der Einzeltiter der Filamente zwischen 1 und 10 dtex, insbesondere 1 und 5 dtex, und der Anteil der Binderfilamente zwischen 5 und 20 Gewichtsprozent. Der Titer der Binderfilamente wird vorzugsweise kleiner als der Titer der tragenden Filamente gewählt.

Die tragenden Filamente der erfindungsgemäßen Spinnvliese bestehen vorzugsweise aus Polyethylenterephthalat. Bevorzugt wird als Schmelzbinder modifiziertes Polyethylenterephthalat, wie es z.B. in der DE-PS 23 46 787 beschrieben wird, mit entsprechend abgesenkten Schmelzpunkt verwendet. Der Schmelzpunkt der Binderfilamente liegt bei dem erfindungsgemäßen Spinnvlies 20 °C, bevorzugt 15 °C, unter dem Schmelzpunkt der Matrixfilamente. Es ist ferner sehr überraschend, daß selbst bei einem so geringen Unterschied der Schmelzpunkte von Binde- und Matrixfilamente eine einwandfreie Verfestigung der Vliese möglich ist, ohne die Matrixfilamente anzuschmelzen.

Die Polyester der Binderfilamente bestehen aus Dicarbonsäure- und Diolkomponenten sowie phosphorhaltigen Kettengliedern und sind dadurch gekennzeichnet, daß die phosphorhaltigen Kettenglieder Struktureinheiten der Formel

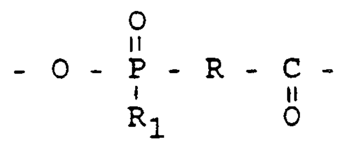

sind, welche etwa 3-20 Molprozent der Säurekomponente des Polyesters ausmachen, wobei in der Formel

R = gesättigter, offenkettiger oder cyclischer Alkylenrest mit vorzugsweise 1-15 C-Atomen oder ein Arylen - oder Aralkylenrest

und

$R_1$ ein Alkylrest mit vorzugsweise bis zu 6 C-Atomen, ein Aryl- oder Aralkylrest ist.

Als Dicarbonsäure-Ausgangsstoffe werden außer der bevorzugten Terephthalsäure auch andere Dicarbonsäuren, vorzugsweise als Cokomponenten, verwendet. Infrage kommen hier beispielsweise Isophthalsäure, 5-Sulfoisophthalsäure, 5-Sulfopropoxyisophthalsäure, Naphthalin-2, 6-dicarbonsäure, Diphenyl-p,p'-dicarbonsäure, p-Phenylendiessigsäure, Diphenyloxid-p,p'-dicarbonsäure, Diphenoxyalkan-dicarbonsäuren, trans-Hexahydroterephthalsäure, Adipinsäure, Sebacinsäure oder 1,2-Cyclobutandicarbonsäure. Als Diolkomponenten kommen neben Ethylenglykol z.B. Propandiol-1,3, Butandiol-1,4 und die höheren Homologen des Butandiols-1,4, sowie weiterhin 2,2-Dimethylpropandiol-1,3, 1,4-Cyclohexandimethanol etc., auch als Cokomponenten in Frage.

Wenn man außer Terephthalsäure noch andere der oben genannten Dicarbonsäuren einsetzt, werden davon vorzugsweise nicht wesentlich mehr als etwa 10 Molprozent der Gesamtsäure-Komponente verwendet. In ähnlicher Weise wird bei der Zusammensetzung der Diolkomponente verfahren. Wenn hier z.B. außer dem Ethylenglykol noch weitere Diole als Cokomponente eingesetzt werden, beträgt deren Menge vorzugsweise ebenfalls nicht wesentlich mehr als 10 Molprozent der gesamten Diolkomponente.

In weiterer Ausgestaltung der Erfindung wird mittels der Binderfilamente ein Antistatikum wie z.B. Ruß in das Spinnvlies eingebracht.

Das erfindungsgemäß ausgebildete Spinnvlies kann im Prinzip nach allen bekannten Vliesherstellungsverfahren insbesondere unter Verwendung einer rotierenden Prallplatte und einer nachgeschalteten Leitfläche hergestellt werden. Die Vliesablage erfolgt vorzugsweise durch hintereinandergeschaltete Reihen von Spinndüsen, so daß eine Schichtstruktur aus tragenden Filamenten und flammfesten Binderfilamenten entsteht. Zweckmäßigerweise enthalten die beiden äußern Schichten keine Binderfilamente.

Bei einem gleichzeitigen Erspinnen der Matrix- und Bindefäden, aus benachbarten Spinndüsenköpfen, oder auch aus einem Düsenkopf, soll eine möglichst gleichmäßige Vermischung beider Faserarten erreicht werden, um eine stochastische Verteilung der Bindungen in dem Mischvlies sicherzustellen. Die Bindefilamente können aber auch mit den tragenden Filamenten in Form von "zusammengesetzten Fäden" extrudiert werden, bei denen die beiden Bestandteile Seite an Seite angeordnet sind, und die üblicherweise nach dem Spinn-/Extrudierverfahren hergestellt werden. Die Querschnitte der Einzelfasern können bei diesem Verfahren in breiten Grenzen variieren und z.B. rund, sichelförmig oder viellappig sein. Solche oder andere mögliche Verfahren für das Einbringen von Bindefasern werden z.B. in der DE-OS 34 19 637 oder der DE-PS 22 40 437 beschrieben.

Meist ist keine Vernadelung der abgelegten Filamente notwendig, sondern nur eine thermische Vorverfestigung, und eine sich daran anschließende endgültige thermische Verfestigung, z.B. mit glatter oder profilierter Walze. Besonders bevorzugt erfolgt die thermische Verfestigung durch Heißluft, z.B. in Siebtrommelfixierern, denen ein Prägewalzenpaar nachgeschaltet sein kann.

Besonders voluminöse Spinnvliese ergeben sich bei einem möglichst geringen Anteil von Binderfilamenten und einer Siebtrommelfixierung. Diese Spinnvliese haben dann auch eine Oberflächenstruktur mit vielen Faserenden, die die

Haftung von Beschichtungsmaterialien, beispielsweise von PVC oder Bitumen deutlich erhöht. Derartige voluminöse Spinnvliese mit faserreicher Oberfläche eignen sich auch zur Herstellung von Filterstoffen.

Die Vorteile des Erfindungsgegenstandes bestehen insbesondere im folgenden:

1. Unproblematische Herstellung des aus tragenden Filamenten und als Schmelzbinder dienenden flammfesten Binderfilamenten bestehenden Spinnvlies.
2. Schwerentflammbarkeit auch bei niedrigen Anteilen an flammwidrigen Binderfilamenten.
3. Die textilen- und bekleidungsphysiologischen Eigenschaften der aus den erfindungsgemäßen Filamenten hergestellten Spinnvliese sind im Vergleich zu den entsprechenden nicht flammfest gemachten Produkten so gut wie unverändert. Demgegenüber verändern die meisten bekannten Flammfestausrüstungen die textilen Gebilde hinsichtlich der genannten Eigenschaften meist ziemlich nachteilig.
4. Ausgezeichnete Wasch- und Chemisch-Reinigungsbeständigkeit des Flammschutzeffektes.
5. Gute Färbbarkeit der Filamente der erfindungsgemäßen Spinnvliese und der daraus hergestellten Textilprodukte, da der Flammschutzeffekt nicht durch eine oberflächliche Ausrüstung bedingt ist.
6. Es besteht keine Gefahr des Abriebs der Flammschutzmittel.
7. Beim Beflammen des Vlieses oder der daraus hergestellten Textilien treten praktisch keine Schmelztröpfchen auf, sondern es erfolgt nur eine Verkohlung des Produktes. Von nicht zu unterschätzenden Vorteil ist dabei der Umstand, daß der Hautkontakt mit brennendem Produkt und damit auch die Verbrennungen geringer sind.
8. Herstellung von feintitrigen Leichtspinnvliesen.
9. Hohe dynamische Tüchtigkeit

Flammhemmend ausgerüstete Vliese können bei der Herstellung von Textilien für viele Verwendungszwecke eingesetzt werden wie z.B. zur Herstellung von Schutzbekleidung für Feuerwehr und für andere feuergefährliche Arbeiten (Raffinerie- und Hochofenarbeiten, Schweißen), als Dekorations- und Vorhangstoffe, für Polstermaterialien, als Dachunterspannbahnen, Militärstoffe, Zeltstoffe und Abdeckplanen, sowie für textile Bodenbeläge oder auch als Bestandteile für Sitzbezüge in Fahrzeugen oder Flugzeugen.

Der Zusatz von Antistatika, im einfachsten Fall von Ruß, im Schmelzzylinder erlaubt darüberhinaus den Einsatz des erfindungsgemäß ausgebildeten Spinnvlieses in explosionsgefährdeten Zonen oder auch als Filtermedium für Reinräume.

## Ansprüche

1. Flammhemmendes Schmelzbinder verfestigtes Spinnvlies aus tragenden Filamenten und als Schmelzbinder dienenden Binderfilamenten, die aus Polyester bestehen, dadurch gekennzeichnet, daß die Binderfilamente aus einem modifizierten Polyethylenterephthalat bestehen, welches flammhemmende Eigenschaften aufweist.

2. Spinnvlies gemäß Anspruch 1, dadurch gekennzeichnet, daß das Flächengewicht des Spinnvlieses über 50 g/m$^2$, vorzugsweise zwischen 50 und 200 g/m$^2$, bevorzugt zwischen 50 und 150 g/m$^2$ liegt.

**3.** Spinnvlies gemäß mindestens einem der obigen Ansprüche, dadurch gekennzeichnet, daß der Einzeltiter der tragenden Filamente und Binderfilamente im Bereich zwischen 1 und 10 dtex, vorzugsweise zwischen 1 und 5 dtex liegt.

**4.** Spinnvlies gemäß mindestens einem der obigen Ansprüche, dadurch gekennzeichnet, daß der Einzeltiter der Binderfilamente kleiner ist als der der tragenden Filamente.

**5.** Spinnvlies gemäß mindestens einem der obigen Ansprüche, dadurch gekennzeichnet, daß der Anteil der Binderfilamente maximal 20 Gew.-%, vorzugsweise zwischen 5 und 20 Gew.-% beträgt.

**6.** Spinnvlies gemäß mindestens einem der obigen Ansprüche, dadurch gekennzeichnet, daß die tragenden Filamente aus Polyethylenterephthalat bestehen.

**7.** Spinnvlies gemäß mindestens einem der obigen Ansprüche, dadurch gekennzeichnet, daß die schwer entflammbaren Binderfilamente aus Polyestern bestehen, in die phosphorhaltige Kettenglieder einkondensiert sind.

**8.** Spinnvlies gemäß mindestens einem der obigen Ansprüche, dadurch gekennzeichnet, daß die schwer entflammbaren Binderfilamente aus Polyestern aus Dicarbonsäure- und Diolkomponenten bestehen in die P-haltige Kettenglieder mit Struktureinheiten der allgemeinen Formel

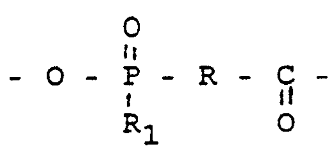

einkondensiert sind, welche 3 bis 20 Molprozent der Säurekomponente des Polyesters ausmachen, wobei in der Formel

R = einen gesättigten, offenkettigen oder cyclischen Alkylen-, einen Arylen- oder einen Aralkylenrest und

$R_1$ = einen Alkylrest mit bis zu 6 C-Atomen, einen Aryl-oder Aralkylrest bedeuten.

**9.** Spinnvlies gemäß Anspruch 8, dadurch gekennzeichnet, daß in den P-haltigen Struktureinheiten
R = $-CH_2-CH_2-$ oder $-C_6H_4-$ und
$R_1$ = $-CH_3$ oder $C_6H_5$
ist.

**10.** Spinnvlies gemäß mindestens einem der obigen Ansprüche, dadurch gekennzeichnet, daß die Binderfilamente ein Antistatikum, insbesondere Ruß enthalten.

Europäisches Patentamt

# EUROPÄISCHER RECHERCHENBERICHT

Nummer der Anmeldung

**EP 90 12 3282**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | US-A-3 962 194 (ULRICH BOLLERT)<br>* das ganze Dokument *<br>– – – | 1-3,7-9 | D 04 H 3/16<br>C 08 G 63/68 |
| Y | EP-A-0 176 847 (HOECHST)<br>* Ansprüche 2-5 *<br>– – – | 1-3 | |
| Y | EP-A-0 092 868 (ANIC)<br>* Seite 1-4; Ansprüche 1-4 *<br>– – – | 1-3 | |
| P,Y | EP-A-0 359 165 (HOECHST)<br>* das ganze Dokument *<br>– – – | 1-3 | |
| A | EP-A-0 100 093 (E.I. DU PONT DE NEMOURS)<br>* Seite 3-6; Ansprüche 1-5 *<br>– – – – – | 10 | |

RECHERCHIERTE SACHGEBIETE (Int. Cl.5)

D 04 H
C 08 G

Der vorliegende Recherchenbericht wurde für alle Patentansprüche erstellt

| Recherchenort | Abschlußdatum der Recherche | Prüfer |
|---|---|---|
| Den Haag | 18 Januar 91 | DURAND F.C. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument